Europäisches Patentamt

European Patent Office

Office européen des brevets

(11) Numéro de publication: **0 186 538**
A2

# DEMANDE DE BREVET EUROPEEN

(21) Numéro de dépôt: **85402211.8**

(22) Date de dépôt: **15.11.85**

(51) Int. Cl.⁴: **B 23 K 1/08**

(30) Priorité: **15.11.84 FR 8417449**

(43) Date de publication de la demande:
**02.07.86 Bulletin 86/27**

(84) Etats contractants désignés:
**AT BE CH DE GB IT LI LU NL SE**

(71) Demandeur: **OUTILLAGES SCIENTIFIQUES ET DE LABORATOIRES O.S.L. S.A.**
**Z.I. Carros - 2e Casier - Lot R**
**F-06510 Carros Industries(FR)**

(72) Inventeur: **Simonetti, Jean-Pierre**
**18, allée de Chanteraine**
**F-91190 Gif/Yvette(FR)**

(74) Mandataire: **Levesque, Denys et al,**
**Cabinet Beau de Loménie 55, rue d'Amsterdam**
**F-75008 Paris(FR)**

(54) Machine de soudage à la vague.

(57) L'invention concerne un dispositif (1) de génération d'une vague de soudure (6) pour machine de soudage à la vague de composants disposés sur des circuits imprimés défilant suivant un chemin (7). Ce dispositif est équipé d'une buse (12) qui, reliée à un bac (2) d'alimentation en soudure liquide muni de résistances électriques chauffantes, est susceptible d'émettre un courant ascendant de soudre formant ladite vague (6) qui vient lécher la face inférieure des circuits imprimés et les queues de composants qui en font saillie. Au voisinage de la bouche (12a) de la buse sont prévus des éléments chauffants auxiliaires (25, 26), destinés à réchauffer la soudure dans la région de la vague (6) et à y maintenir sa température à une valeur supérieure à une valeur donnée de façon à empêcher la formation d'un voile d'eutectique.

./...

Croydon Printing Company Ltd.

Fig.1

## DISPOSITIF CHAUFFANT DE GENERATION D'UNE VAGUE DE SOUDURE
## POUR MACHINE DE SOUDAGE A LA VAGUE.

La présente invention se rapporte à un dispositif de génération d'une vague de soudure pour machine de soudage à la vague de composants disposés sur des circuits imprimés supports défilant à travers la machine, ce dispositif étant équipé d'une buse qui comprend une chambre de forme allongée délimitée par deux parois et une bouche s'ouvrant à son sommet et s'étendant au-dessous du chemin de défilement des circuits imprimés, sur toute la largeur de celui-ci, cette buse, reliée à un bac d'alimentation en soudure liquide équipé de résistances électriques chauffantes, étant susceptible d'émettre un courant ascendant de soudure formant une vague qui vient lécher la face inférieure des circuits imprimés et les queues de composants qui en font saillie.

En raison des nombreux avantages qu'il offre, le procédé de soudage à la vague dynamique des composants sur des circuits imprimés a pris une importance croissante dans l'industrie électronique. Toutefois, malgré les perfectionnements qu'ont reçus les machines de soudage à la vague, leur rendement de fabrication est souvent inférieur à 100%, de sorte que les produits obtenus doivent être soigneusement vérifiés en vue de détecter les défauts qu'ils peuvent comporter (excès de soudure susceptibles de créer des ponts intempestifs et, inversement, manques de soudure laissant des composants non soudés), et d'y remédier par des retouches faites à la main, ce qui est long et dispendieux.

Les ponts de soudure pouvant affecter les produits ont souvent pour origine un voile d'eutectique qui se forme à la surface de la vague lorsque la température y est insuffisante, et qui est entraîné par les queues de composants des circuits imprimés quittant la vague. On doit à cet égard observer que la situation de la vague est éloignée du bac de réserve où sont disposées les résistances électriques de chauffage qui assurent la liquéfaction de la soudure; de plus, la vague est particulièrement soumise à des déperditions de chaleur, du fait que sa surface se trouve directement exposée à l'atmosphère et aux circuits imprimés, et que son épaisseur est relativement faible, tandis que la vitesse d'écoulement de la soudure y est élevée. On conçoit donc que la surface de la vague puisse se refroidir jusqu'à approcher la température du point eutectique où commence à se former le voile précité.

La présente invention a pour but d'éviter la formation d'un tel voile ou tout au moins de le fluidifier de façon à minimiser la dimension des drapeaux de soudure entraînés par les queues de composants.

A cet effet, le dispositif est, selon l'invention, doté, au voisinage de la bouche de la buse, d'au moins un élément chauffant auxiliaire pouvant réchauffer la soudure dans la région de la vague et y maintenir sa température à une valeur supérieure à une valeur donnée, cette dernière correspondant en pratique au point d'apparition de l'eutectique pâteux (183$^{o}$C pour une soudure composée de 63 % d'étain et de 37 % de plomb).

Un élément chauffant auxiliaire peut être disposé en amont de la paroi avant de la buse suivant le sens de défilement des circuits imprimés, de préférence le long du bord supérieur de la paroi avant de la buse, sous une tôle de guidage d'un courant de soudure se déversant de la buse vers l'amont.

Un élément chauffant auxiliaire peut également être disposé en aval de la paroi arrière de la buse suivant le sens de défilement des circuits imprimés, baignant éventuellement dans un courant de soudure se déversant de la buse vers l'aval. Il convient que ce dernier élément chauffant, et plus généralement chaque élément chauffant incorporé au dispositif, soit doté d'un fourreau protecteur dans lequel il peut être mis en place et d'où il peut être retiré tandis que la soudure est en fusion, par exemple pour échange en cas de défaillance, sans qu'il soit nécessaire de refroidir la soudure.

Avantageusement, chaque élément chauffant comprend une résistance électrique de chauffage.

Dans une forme de réalisation préférée, la puissance de chauffage de l'élément chauffant ou de l'un au moins des éléments chauffants du dispositif est commandée par asservissement à l'aide d'au moins un capteur thermométrique mesurant la température de la soudure au voisinage de la vague. Cette disposition permet de maintenir de façon précise la température de la vague à la valeur désirée, ce qui est particulièrement utile dans le cas de l'utilisation d'une soudure dont le point d'eutectique est proche de la température à laquelle la soudure doit être portée par le soudage (par exemple une soudure à l'argent à haut point de fusion).

Le dispositif peut alors être équipé, à titre de capteur thermométrique, soit d'une sonde thermo-sensible incluse dans une tôle guidant l'écoulement de la soudure, soit d'une sonde thermo-sensible disposée dans le courant ascendant de soudure émis par la bouche de la buse, sensiblement au centre de ladite bouche suivant la direction de défilement des circuits imprimés, soit encore d'un pyromètre infrarouge visant la surface de la soudure dans la région de la vague.

D'autres caractéristiques et avantages de l'invention ressortiront plus clairement de la description qui va suivre, en regard des dessins annexés, d'un exemple de réalisation non limitatif.

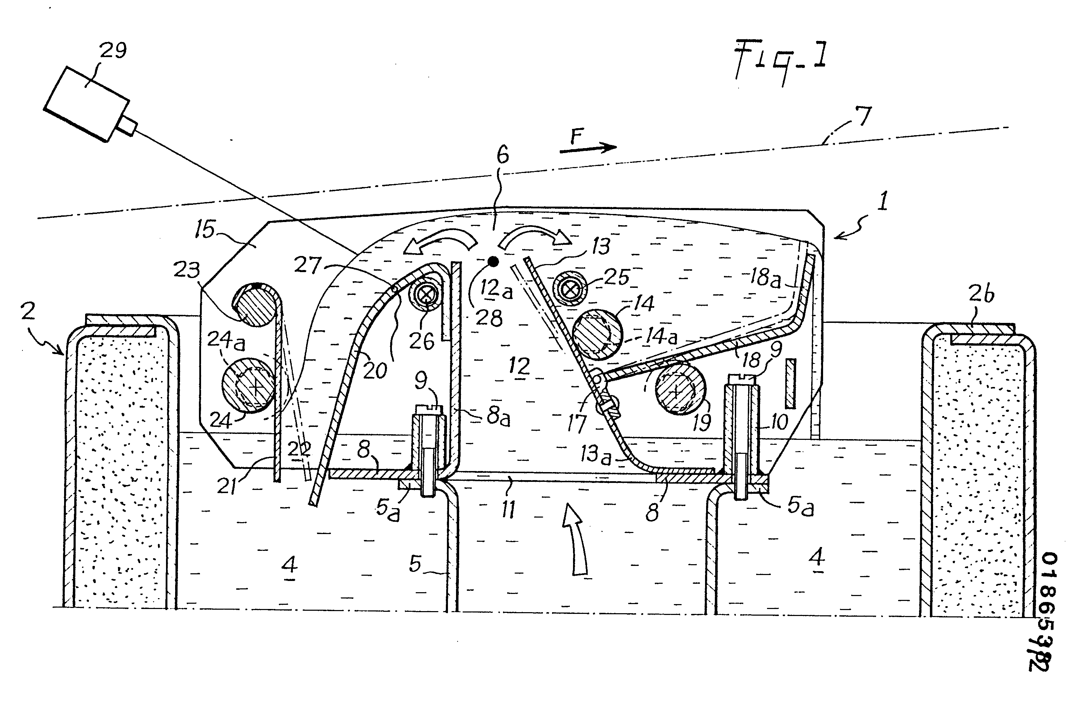

La figure 1 représente, en coupe par un plan vertical parallèle à la direction de défilement des circuits imprimés, un dispositif selon l'invention monté sur le bac à soudure d'une machine de soudage à la vague.

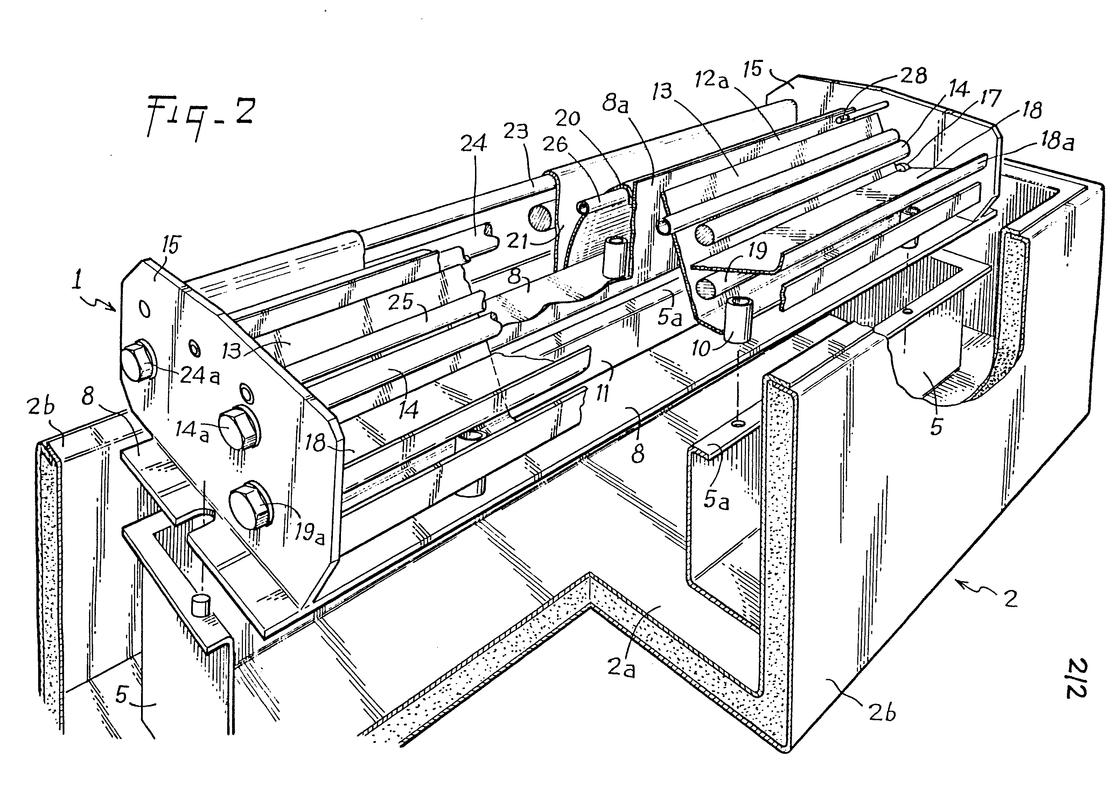

La figure 2 montre, en perspective avec arrachements, le dispositif de la figure 1 présenté au-dessus du bac à soudure.

On voit sur les figures un dispositif 1 conçu pour créer une vague de soudure liquide dans une machine de soudage à la vague de circuits imprimés. Ce dispositif constitue un ensemble unitaire qui est monté sur un bac 2 d'alimentation en soudure liquide. Le bac 2, dont le fond 2a et les parois 2b sont calorifugés, est équipé, de manière connue, de résistances électriques chauffantes (non représentées) assurant la mise en fusion de la masse de soudure 4 qu'il contient, et d'une pompe (également non représentée) pour refouler la soudure liquide, avec un débit déterminé, via un conduit 5 vers le dispositif 1. Ce dernier, ainsi alimenté, donne naissance à une vague de soudure 6 qui vient lécher le dessous des circuits imprimés défilant au-dessus du dispositif 1 dans le sens de la flèche F suivant un chemin rectiligne 7 légèrement ascendant. La soudure, mouillant les parties métallisées des circuits imprimés et les queues des composants qui ont été préalablement disposés sur lesdits circuits, en assure le soudage mutuel. Le dispositif 1 et son conduit d'alimentation 5 s'étendent, transversalement à la direction de défilement des circuits imprimés, sur toute la largeur du chemin que ceux-ci suivent.

Le dispositif 1 comprend une plaque de base 8 qui se fixe sur un rebord sommital 5a du conduit 5 au moyen de vis 9 prenant place dans des entretoises tubulaires 10 soudées à ladite plaque. Cette dernière, bordée de deux joues latérales 15, comporte sur presque toute sa longueur un large crevé 11, la partie correspondante 8a de la plaque étant repliée vers le haut à 90° pour former l'une des parois d'une buse 12 convergente dont l'autre paroi est constituée par une feuille 13 oblique élastiquement flexible, soudée à la plaque 8, dont la position angulaire autour de sa zone incurvée 13a est réglable à l'aide d'une came rotative 14 dotée d'une tête hexagonale 14a d'actionnement. Ce réglage permet de rétrécir plus ou moins la section de passage de la bouche 12a de la buse 12.

Sur la paroi arrière 13 de la buse 12 est articulé, au moyen d'organes 17, un plateau 18 qui s'étend vers l'aval de la buse, en reposant sur une came 19 et se termine par un rebord relevé 18a. Ce plateau reçoit une partie de la soudure qui a formé la vague 6, ce courant de soudure dirigé vers l'aval se déversant par-dessus le rebord 18a pour retomber dans le bac 2. Par manoeuvre d'une tête hexagonale 19a disposée à une extrémité de la came 19, on peut faire varier le niveau de l'arête supérieure de déversement du rebord 18a et, par là, la vitesse du courant partiel de soudure en cause.

La majeure partie de la soudure issue de la vague 6 s'écoule vers l'amont sur une plaque 20 incurvée suivant un profil convexe et soudée au bord supérieur de la paroi avant de la buse. En regard de cette plaque 20 fixe est prévu un volet 21 sensiblement vertical, fait d'une feuille élastiquement flexible, qui forme avec elle un intervalle 22 de réception dudit courant de soudure. Afin de pouvoir modifier la vitesse d'écoulement de ce dernier, cet intervalle est rendu réglable par variation de l'orientation du volet 21 autour d'une tige support 23 fixe, encastrée dans les joues 15, au moyen d'une came 24 qui peut être actionnée en rotation au moyen d'une tête hexagonale 24a terminale, voisine des têtes 14a et 19a des deux autres cames.

Le dispositif 1 est d'autre part muni de deux éléments chauffants auxiliaires 25, 26 s'étendant entre les joues 15 au voisinage de la bouche 12a de la buse. Ces éléments chauffants ont pour but de réchauffer la soudure dans la région de la vague 6 où elle est sujette à d'importantes déperditions de chaleur.

L'élément chauffant 25 est disposé en aval de la buse 12, au sein du courant de soudure qui se déverse par-dessus le rebord 18a du plateau 18. L'élément chauffant 26 est disposé en amont de la buse, sous la plaque incurvée 20 guidant le courant principal de soudure issu de la vague 6. Ce second élément chauffant n'est donc pas immergé dans la soudure liquide.

Chaque élément chauffant 25, 26 comprend une résistance électrique logée de façon amovible dans un fourreau étanche qui s'étend d'une joue 15 à l'autre. Ainsi, le retrait et la remise en place d'une résistance électrique est possible de manière aisée, même lorsque le dispositif 1 est en service et que la soudure liquide y circule pour former la vague 6.

La température effective de la soudure dans la région de la vague peut être relevée au moyen d'un capteur de mesure, afin de réaliser une régulation de cette température via un circuit d'asservissement commandant, par comparaison de la température mesurée à une valeur de consigne, l'alimentation électrique des éléments chauffants 25, 26. Pour ce capteur de mesure, on peut envisager soit une sonde thermométrique oblongue 27, logée dans un fin canal creusé dans l'épaisseur de la plaque 20, d'une extrémité à l'autre de celle-ci, soit une sonde thermométrique ponctuelle 28, disposée dans le courant ascendant de soudure, sensiblement au centre de la bouche 12a et à proximité de l'une des joues 15, soit un pyromètre infrarouge 29 visant la surface de la soudure du côté amont de la vague 6.

REVENDICATIONS

1. Dispositif de génération d'une vague de soudure pour machine de soudage à la vague de composants disposés sur des circuits imprimés supports défilant à travers la machine, ce dispositif étant équipé d'une buse qui comprend une chambre de forme allongée délimitée par deux parois et une bouche s'ouvrant à son sommet et s'étendant au-dessous du chemin de défilement des circuits imprimés, sur toute la largeur de celui-ci, cette buse, reliée à un bac d'alimentation en soudure liquide équipé de résistances électriques chauffantes, étant susceptible d'émettre un courant ascendant de soudure formant une vague qui vient lécher la face inférieure des circuits imprimés et les queues de composants qui en font saillie,
le dispositif étant caractérisé par le fait qu'il est doté, au voisinage de la bouche (12a) de la buse (12), d'au moins un élément chauffant auxiliaire (25, 26) pouvant réchauffer la soudure dans la région de la vague (6) et y maintenir sa température à une valeur supérieure à une valeur donnée.

2. Dispositif selon la revendication 1, caractérisé par le fait qu'il comporte un élément chauffant (26) disposé en amont de la paroi avant (8a) de la buse (12) suivant le sens (F) de défilement des circuits imprimés.

3. Dispositif selon la revendication 2, caractérisé par le fait que l'élément chauffant (26) est disposé le long du bord supérieur de la paroi avant (8a) de la buse, sous une tôle (20) de guidage d'un courant de soudure se déversant de la buse (12) vers l'amont.

4. Dispositif selon l'une quelconque des revendications 1 à 3, caractérisé par le fait qu'il comporte un élément chauffant (25) disposé en aval de la paroi arrière (13) de la buse (12) suivant le sens (F) de défilement des circuits imprimés.

5. Dispositif selon la revendication 4, caractérisé par le fait que l'élément chauffant (25) baigne dans un courant de soudure se déversant de la buse (12) vers l'aval.

6. Dispositif selon l'une quelconque des revendications 1 à 5, caractérisé par le fait que chaque élément chauffant (25, 26) est doté d'un fourreau protecteur dans lequel il peut être mis en place et d'où il peut être retiré tandis que la soudure est en fusion.

7. Dispositif selon l'une quelconque des revendications 1 à 6, caractérisé par le fait que chaque élément chauffant (25, 26) comprend une résistance électrique de chauffage.

8. Dispositif selon l'une quelconque des revendications 1 à 7, caractérisé par le fait que la puissance de chauffage de l'élément chauffant ou de l'un au moins des éléments chauffants (25, 26) est commandée par asservissement à l'aide d'au moins un capteur thermométrique mesurant la température de la soudure au voisinage de la vague.

9. Dispositif selon la revendication 8, caractérisé par le fait qu'il est équipé, à titre de capteur thermométrique, d'une sonde thermo-sensible (27) incluse dans une tôle (20) guidant l'écoulement de la soudure.

10. Dispositif selon la revendication 8, caractérisé par le fait qu'il est équipé, à titre de capteur thermométrique, d'une sonde thermo-sensible (28) disposée dans le courant ascendant de soudure émis par la bouche (12a) de la buse, sensiblement au centre de ladite bouche.

11. Dispositif selon la revendication 8, caractérisé par le fait qu'il est équipé, à titre de capteur thermométrique, d'un pyromètre infrarouge (29) visant la surface de la soudure dans la région de la vague (6).

Fig-1

Fig.2